# FASCICULE DE BREVET EUROPEEN

(11) **EP 3 649 027 B1**
(45) Date de publication et mention de la délivrance du brevet: **03.05.2023**
(21) Numéro de dépôt: 18735662.1
(22) Date de dépôt: 07.06.2018
(51) Int. Cl.: B60W 50/08, B60W 10/06, B60W 30/18

(54) **PROCÉDÉ DE CONTRÔLE DE LA RECHARGE D'UNE BATTERIE DE TRACTION À L'ARRET POUR UN VÉHICULE HYBRIDE**
VERFAHREN ZUR STEUERUNG DES AUFLADENS EINER TRAKTIONSBATTERIE FÜR EIN HYBRIDFAHRZEUG
METHOD FOR CONTROLLING CHARGING OF A TRACTION BATTERY FOR A HYBRID VEHICLE

(30) Priorité: 05.07.2017 FR 1756326
(43) Date de publication de la demande: 13.05.2020
(73) Titulaire: PSA Automobiles SA, 78300 Poissy (FR)
(72) Inventeur: COZ, Emmanuel, 92190 Meudon (FR)
(86) Numéro de dépôt international: PCT/FR2018/051327
(87) Numéro de publication internationale: WO 2019/008243

(56) Documents cités:
- FR-A1- 2 988 675
- FR-A1- 2 992 274
- US-A1- 2005 014 602
- US-A1- 2006 199 696
- US-A1- 2010 006 358

## Description

Le domaine de l'invention concerne un procédé de contrôle de la recharge électrique d'une batterie d'un véhicule hybride à l'arrêt. L'invention s'applique avantageusement aux véhicules hybrides à architecture parallèle, série ou dérivation de puissance.

Certains véhicules hybrides électriques permettent la recharge de la batterie de traction en dehors d'un cycle de roulage, c'est à dire lorsque le véhicule est à l'arrêt. Classiquement, la stratégie d'activation d'une recharge électrique à l'arrêt est activée automatiquement et est conditionnée à un état de charge de la batterie de traction au regard d'un seuil de déclenchement d'une recharge. Toutefois, dans certaines situations de roulage, il arrive que le conducteur souhaite augmenter l'état de charge de la batterie de traction alors même que celui-ci est au dessus du seuil de déclenchement. C'est le cas par exemple en prévision de l'entrée dans une zone de circulation restreinte imposant un roulage en propulsion uniquement électrique. Ces zones de circulation restreintes sont couramment appelées « Zero Emission Zone » ou « Low Emission Zone » en anglais.

On connaît de l'état de la technique le document brevet FR2992274B1 qui décrit un procédé de commande d'une recharge électrique à l'arrêt pour un véhicule hybride et dans lequel la recharge électrique est activée sur requête de l'utilisateur par une interface dédiée, telle qu'un bouton, écran tactile ou une commande vocale.

On connait en outre le document de brevet US-A1-2005014602 divulguant le préambule de la revendication 1.

Bien qu'intéressante, cette stratégie requière l'ajout d'une interface spécifique pour prendre en compte la fonctionnalité de recharge électrique à l'arrêt et amène donc un coût supplémentaire à prendre en compte au niveau de l'interface homme machine de l'habitacle. Un objectif de l'invention est de remédier à cet inconvénient en réduisant le coût d'implémentation de l'interface d'activation de la recharge.

Plus précisément, l'invention concerne un procédé de contrôle d'une recharge d'une batterie de traction pour un véhicule automobile hybride comprenant un moteur thermique et une machine électrique de traction, dans lequel la recharge de la batterie de traction est pilotée par une consigne de couple de recharge qui varie selon le régime du moteur thermique et s'exécute à l'arrêt du véhicule. Le procédé est remarquable en ce que l'activation de la recharge est déclenchée :
- lors de la détection de l'atteinte d'une position prédéterminée de déclenchement de la recharge par la pédale d'accélération du véhicule, et
- seulement en cas de détection du positionnement du levier de commande d'une boite de vitesses du véhicule dans une position de point mort ou dans une position de stationnement du véhicule.

Avantageusement, l'activation de la recharge est déclenchée immédiatement après la détection de l'atteinte de la position prédéterminée de déclenchement de la recharge.

Avantageusement, la position prédéterminée de déclenchement de la recharge est située dans une plage d'enfoncement délimitée par les positions correspondant respectivement à 80% et 100% d'enfoncement de la pédale d'accélération.

Avantageusement, durant la recharge, la puissance de la recharge est pilotable par l'enfoncement de la pédale d'accélération.

Avantageusement, durant la recharge, le régime du moteur thermique est piloté par la pédale d'accélération.

Avantageusement, la recharge est désactivée si l'une quelconque des conditions suivantes est respectée: si le levier de commande d'une boite de vitesses du véhicule est positionné dans une position d'une marche arrière, dans une position d'un fonctionnement automatique de la boite de vitesses ou dans une position d'un fonctionnement manuel de la boite de vitesses, si un mode de roulage à propulsion uniquement électrique est sélectionné, si la vitesse du véhicule est supérieure à un seuil prédéterminé.

Il est prévu selon l'invention un véhicule automobile hybride qui exécute le procédé selon l'un quelconque des modes de réalisation précédent.

Grâce à l'invention, le conducteur est en possibilité d'activer la recharge électrique à l'arrêt du véhicule en intervenant sur la pédale d'accélération. Cette fonction lui autorise la prise de contrôle de la recharge électrique et de façon immédiate notamment pour répondre à une situation de roulage ne pouvant être anticipée par le superviseur de contrôle du groupe motopropulseur, par exemple lors de l'approche d'une zone de circulation restreinte. De plus, le conducteur est en capacité de piloter la puissance de recharge en ajustant l'enfoncement de la pédale d'accélération du véhicule.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente un schéma simplifié d'un groupe motopropulseur de véhicule hybride apte à mettre en oeuvre l'invention ;
- la figure 2 représente un cycle de roulage d'un véhicule hybride et la variation de l'état de charge de la batterie de traction durant lequel le conducteur active la recharge électrique à l'approche d'une zone de circulation restreinte ;
- La figure 3 représente une séquence du procédé de contrôle de la recharge électrique à l'arrêt du véhicule selon l'invention ;
- la figure 4 représente un graphique décrivant un exemple d'une position de déclenchement de la recharge électrique de la pédale d'accélération et une valeur de régime moteur associée à la course de la pédale.

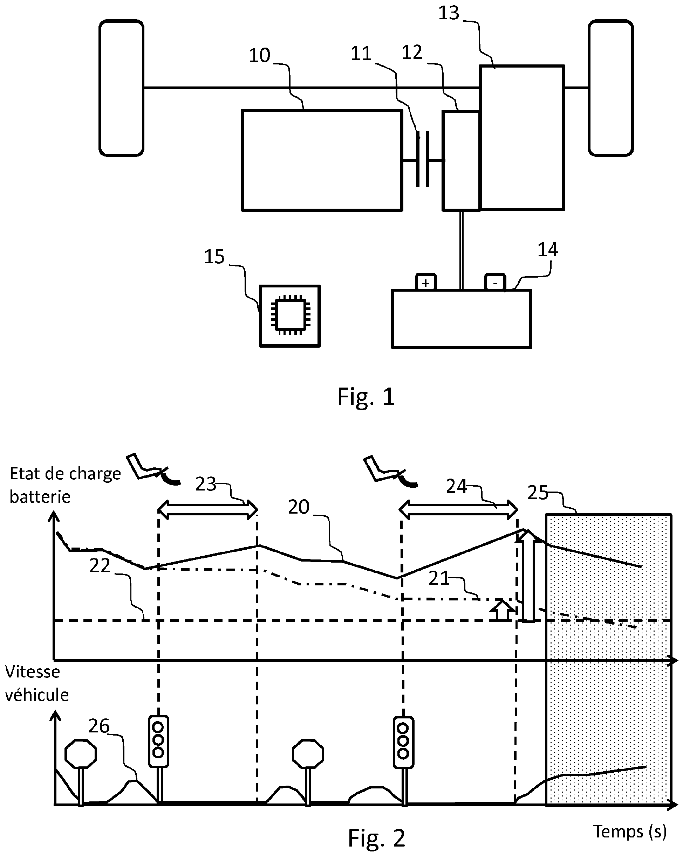

Sur la figure 1, on a représenté à titre d'exemple non limitatif un groupe motopropulseur hybride apte à mettre en oeuvre l'invention. Le groupe motopropulseur comporte un moteur thermique de traction 10 monté sur un train de roues du véhicule, un dispositif de couplage 11, une machine électrique de traction 12 et une boite de vitesses 13. Le dispositif de couplage 11 est un embrayage qui est apte à solidariser en transmission le vilebrequin du moteur thermique 10 avec l'arbre primaire de la boite de vitesses 13 et le rotor de la machine électrique de traction 12, lequel rotor est monté solidaire à l'arbre primaire de la boite de vitesses. Le courant induit de la machine électrique de traction 12 peut être piloté de manière à ce que la machine électrique fournisse un couple aux roues pour mouvoir le véhicule ou alternativement un couple de recharge pour recharger une batterie de traction 14. Un dispositif de contrôle 15, couramment appelé superviseur de contrôle, calculateur, unité de commande ou par l'acronyme ECU en anglais pour « Electronic Control Unit » est en charge de coordonner les organes de transmission du groupe motopropulseur en fonction de la volonté du conducteur et des fonctions de pilotage, telle qu'une fonction de recharge électrique pilotant une recharge électrique de la batterie de traction 14.

Plus généralement, l'invention s'applique aux architectures hybrides de type série, parallèle ou à dérivation de puissance. Pour la mise en oeuvre de l'invention, il est essentiel que le véhicule dispose de moyens de recharge électrique pour opérer une recharge électrique d'une batterie à l'arrêt du véhicule. A cet effet, le véhicule peut fonctionner de façon similaire à un groupe électrogène dans lequel le moteur thermique du groupe motopropulseur fonctionne comme une génératrice alimentée par le carburant du réservoir du véhicule et la machine électrique fonctionne comme un générateur entrainé par le moteur thermique.

La figure 2 représente un cycle de roulage du véhicule hybride durant lequel deux recharges électriques 23, 24 sont activées par le conducteur lors de phases d'arrêt provisoires du véhicule à la rencontre de feux rouges ou de panneaux de circulation d'arrêt. Un graphique en partie supérieure illustre une première courbe 20 en trait plein représentant l'état de charge de la batterie de traction 14 en activant les deux recharges électriques à l'arrêt. Une deuxième courbe 21 en trait pointillé représente l'état de charge de la batterie de traction 14 selon un autre scénario dans lequel aucune activation de la recharge électrique à l'arrêt est déclenchée. Un graphique en partie inférieure illustre l'évolution d'une courbe de vitesse 26 du véhicule indiquant les phases d'arrêt lorsque celle-ci a une valeur nulle. Une ligne en trait pointillé 22 représente un seuil d'état de charge minimum de la batterie garantissant le démarrage du moteur thermique 10. Classiquement, ce seuil est exploité par des fonctions de pilotage du dispositif de contrôle 15 pour déclencher automatiquement la recharge électrique. Ainsi, tant que l'état de charge de la batterie de traction est supérieur à ce seuil, la recharge électrique n'est pas activée automatiquement.

Lors de ce cycle de roulage, le véhicule se dirige vers une zone à circulation restreinte 25 de type « Zero Emission Zone ». Pour assurer un roulage tout électrique dans cette zone de circulation (c'est à dire une propulsion uniquement électrique du véhicule), il est nécessaire d'y accéder avec un état de charge de la batterie de traction 14 présentant une marge de charge suffisante au dessus du seuil 22. Les activations des deux recharges électriques 23, 24 permettent de remplir cet objectif, ce qui ne serait pas le cas par un contrôle automatique de la recharge correspondant à la courbe 21.

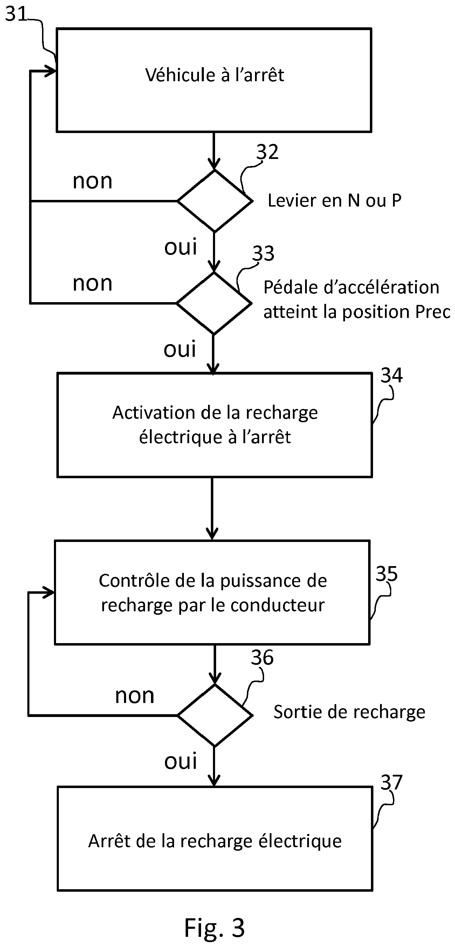

La figure 3 représente la séquence du procédé de contrôle de la recharge électrique à l'arrêt du véhicule exécuté par le dispositif de contrôle 15 du groupe motopropulseur 1. A une première étape 31, le véhicule est à l'arrêt, par exemple à un feu rouge ou en stationnement. Durant cette phase, on entend que le véhicule est l'arrêt car celui-ci est immobile et la transmission entre les moteurs de traction et les roues est coupée ou bloquée. L'embrayage 11 est en position ouverte. De plus, aucun rapport de la boite de vitesse n'est engagé.

Lorsque le conducteur souhaite activer la recharge électrique, celui-ci positionne le levier de commande de la boite de vitesses dans une position correspondant au point mort de la boite de vitesses, couramment indiquée par la position N, ou dans une position correspondant au stationnement du véhicule, couramment indiquée par la position P. L'un ou l'autre des deux choix dépendra du choix du conducteur selon la situation d'arrêt.

Ensuite, le procédé vérifie l'état de configuration du levier de commande de la boite de vitesses, s'il est en position N ou P. Afin d'assurer la sécurité du conducteur, une activation d'une recharge électrique à l'arrêt du véhicule est autorisée seulement en cas de détection 32 du positionnement du levier de commande dans l'une de ces deux positions mentionnées ci-avant. Le procédé contrôle que la transmission aux roues n'est pas effective. Le dispositif de contrôle 15 dispose de moyens de détection du positionnement du levier de commande, tel qu'un signal d'information émis par le dispositif de levier de commande ou un capteur proportionnel de position du levier de commande. En cas de vérification positive, le procédé passe à l'étape 33 en attente d'une détection de l'événement déclencheur de la recharge électrique par le conducteur. Dans le cas contraire, une activation d'une recharge électrique à l'arrêt du véhicule n'est pas autorisée.

Conventionnellement, on notera que dans ces deux positions du levier de commande, si le moteur thermique 10 est à l'arrêt, une action du conducteur sur la pédale d'accélération n'aura aucun effet. Eventuellement, si le moteur thermique 10 est allumé, une action du conducteur fera uniquement varier le régime du moteur thermique.

Or, l'invention se différencie de l'état de la technique en ce que, l'activation de la recharge est déclenchée lors de la détection 33 de l'atteinte d'une position prédéterminée de déclenchement de la recharge Prec par la pédale d'accélération du véhicule. Ainsi, il est possible pour le conducteur de décider d'activer la recharge électrique simplement et immédiatement en enfonçant fortement la pédale d'accélération jusqu'à atteindre ou dépasser la dite position prédéterminée de déclenchement.

Conformément à l'invention, l'activation 34 de la recharge est déclenchée immédiatement après la détection 33, c'est à dire dans une durée nécessaire pour la détection de la position de la pédale et le traitement des signaux de commande pour déclencher la recharge (entre une centaine et plusieurs centaines de millisecondes). On évite ainsi un décalage entre l'action du conducteur pour activer la recharge et l'activation effective si de surcroît celle-ci est conditionnée à des paramètres non contrôlables directement par le conducteur. C'est le cas par exemple du document brevet FR2992274B1 dans lequel l'activation peut être conditionnée de plus à un état de charge de la batterie. Dans certaines situations, on peut imaginer que l'opération de recharge puisse se déclencher inopinément et surprendre le conducteur une fois seulement que la condition d'état de charge est respectée.

A cet effet, l'activation 34 de la recharge est indépendante de l'état de charge de la batterie de traction 14 et peut être déclenchée par exemple lorsque l'état de charge de la batterie est supérieur au seuil de déclenchement automatique 22 qui a été mentionné en figure 2, ou lorsque l'état de charge est à une valeur proche du niveau maximum de charge. Grâce à l'invention, l'activation de la recharge repose uniquement sur les critères de décisions du conducteur.

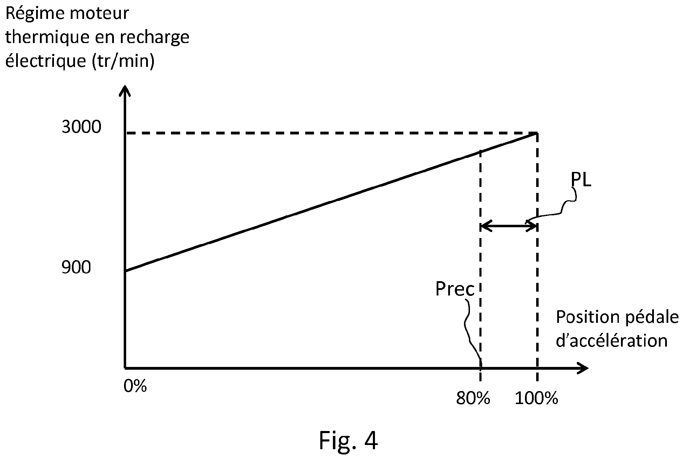

Comme on le voit sur la figure 4, la position de déclenchement de la recharge Prec est configurable et peut être située dans une plage d'enfoncement PL couvrant uniquement la fin de la course de la pédale d'accélération. Dans une variante, la plage d'enfoncement PL est délimitée par les positions correspondant respectivement à 80% et 100% d'enfoncement de la pédale d'accélération, par exemple Prec correspond à la position située à 80% d'enfoncement de la pédale d'accélération. Une position élevée de la position de déclenchement Prec permet d'éviter une activation involontaire de la recharge.

Donc, lorsque la pédale d'accélération atteint ou dépasse la position Prec, la recharge électrique est activée. Selon le procédé de contrôle, à l'étape 34 le dispositif de contrôle 15 déclenche la configuration du groupe motopropulseur dans un mode de recharge électrique à l'arrêt de manière à fonctionner comme un groupe électrogène. On notera que tant que la pédale d'accélération reste actionnée dans une position qui précède la position de déclenchement Prec, la recharge électrique n'est pas activée et le procédé retourne à l'étape initiale 31. Le moteur thermique 10 reste éteint, ou son régime varie conformément à la position de la pédale correspondante s'il est déjà allumé.

De préférence, la position prédéterminée de déclenchement de la recharge Prec est le point dur de la pédale d'accélération. Généralement, le point dur correspond à la position finale en toute fin de course de la pédale. Par exemple, la position Prec peut être détectée par un capteur proportionnel associé à la pédale ou à un capteur de pression associé à un circuit de commande hydraulique de la pédale. Le point dur correspond à une demande importante du conducteur.

Classiquement, dans un mode automatique de pilotage de la boite de vitesses, quand le point dur est atteint lors d'un cycle de roulage du véhicule, le dispositif de contrôle 15 commande une descente de rapport de vitesses afin de répondre à une demande d'accélération importante. Dans cette procédure de pilotage d'une boite automatique ou semi-automatique, le point dur est couramment désigné par le terme anglais « Kick Down ». Dans le cadre de l'invention, le point dur est judicieusement utilisé à l'arrêt du véhicule pour activer la recharge électrique.

Plus précisément, à l'étape 34, le procédé démarre le moteur thermique 10 si celui-ci est éteint, puis commande la synchronisation du régime de la machine électrique de traction 12 en fonction du régime du moteur thermique 10. Une fois que le régime de la machine électrique 12 est synchronisé avec le régime du moteur thermique 10, le procédé commande le couplage de la machine électrique de traction 12 et du moteur thermique 10. L'arbre du moteur thermique et l'arbre de la machine électrique 12 sont alors solidaires en rotation et tournent au même régime de rotation. Le couplage est opéré en pilotant l'embrayage 11 dans une position fermée.

Une fois que la transmission entre le moteur thermique 10 et la machine électrique 12 est effective, la machine électrique 12 est pilotée par une consigne de couple de recharge de manière à générer de l'énergie électrique et recharger la batterie de traction 14. Le couple de recharge est déterminé par une fonction de recharge électrique du dispositif de contrôle 15 en fonction de paramètres de roulage parmi lesquels le régime du moteur thermique 10. Le couple de recharge est prélevé sur le couple moteur fourni par le moteur thermique. Le couple de recharge est variable en fonction du régime du moteur thermique, ou dans une variante peut rester constant tout du long de la recharge.

Ensuite, une fois que la recharge électrique est activée, le conducteur peut relâcher la pédale d'accélération totalement, ou à une position inférieure à la position de déclenchement de la recharge Prec. Quelle que soit la position de la pédale d'accélération à la suite de l'activation 34 de la recharge, la recharge électrique reste active et effective. En position totalement relâchée de la pédale d'accélération, la recharge électrique est effective au régime de ralenti du moteur thermique 10, correspondant par exemple à 900 tr/min comme cela est illustré en figure 4. A titre d'exemple, le régime du moteur thermique varie entre un régime dit de ralenti, ici 900 tr/min, et un régime maximum, ici 3000 tr/min, pour une position de la pédale d'accélération variant entre 0% et 100%.

Ensuite, à une étape 35 durant la recharge, la puissance de la recharge est pilotable par l'enfoncement de la pédale d'accélération. De préférence, durant la recharge la consigne de couple de recharge varie en fonction du régime du moteur thermique de manière à fonctionner sur les points de fonctionnement de la machine électrique 12 ayant le rendement électrique maximum. On notera que durant la recharge le régime du moteur thermique 10 est piloté par la pédale d'accélération permettant ainsi au conducteur d'augmenter ou baisser la puissance de recharge selon sa volonté.

Ensuite, à une étape 36, lorsque les conditions de sortie de la recharge électrique sont détectées le procédé désactive la recharge électrique, sinon la recharge électrique reste active dans l'étape 35. A une étape 37, le procédé commande une procédure de désactivation de la recharge comportant selon la configuration recherchée du groupe motopropulseur le désaccouplement de la machine électrique de traction 12 et du moteur thermique 10 par l'ouverture de l'embrayage 11 dans cette architecture, puis la procédure d'arrêt du moteur thermique si le véhicule reste à l'arrêt.

Plus précisément, la recharge est désactivée si au moins l'une quelconque des conditions suivantes est respectée : si le levier de commande de la boite de vitesses du véhicule est positionné dans une position d'une marche arrière, dans une position d'un fonctionnement automatique de la boite de vitesses ou dans une position d'un fonctionnement manuel de la boite de vitesses, si un mode de roulage à propulsion uniquement électrique est sélectionné (via un bouton de l'habitacle ou une position dédiée du levier de manoeuvre), ou si la vitesse du véhicule est supérieure à un seuil prédéterminé.

## Revendications

1. Procédé de contrôle d'une recharge (35) d'une batterie de traction (14) pour un véhicule automobile hybride comprenant un moteur thermique (10) et une machine électrique de traction (12), dans lequel la recharge (35) de la batterie de traction est pilotée par une consigne de couple de recharge qui varie selon le régime du moteur thermique (10) et s'exécute à l'arrêt du véhicule, le procédé étant **caractérisé en ce que** l'activation (34) de la recharge (35) est déclenchée :
- lors de la détection (33) de l'atteinte d'une position prédéterminée de déclenchement de la recharge (Prec) par la pédale d'accélération du véhicule, et
- seulement en cas de détection (32) du positionnement du levier de commande d'une boite de vitesses (13) du véhicule dans une position de point mort ou dans une position de stationnement du véhicule.

2. Procédé de contrôle selon la revendication 1, **caractérisé en ce que** l'activation (34) de la recharge (35) est déclenchée immédiatement après la détection (33) de l'atteinte de la position prédéterminée de déclenchement de la recharge (Prec).

3. Procédé de contrôle selon la revendication 1 ou 2, **caractérisé en ce que** la position prédéterminée de déclenchement de la recharge (Prec) est située dans une plage d'enfoncement délimitée par les positions correspondant respectivement à 80% et 100% d'enfoncement de la pédale d'accélération.

4. Procédé de contrôle selon l'une quelconque des revendications 1 à 3, **caractérisé en ce que**, durant la recharge (35), la puissance de la recharge est pilotable par l'enfoncement de la pédale d'accélération.

5. Procédé de contrôle selon l'une quelconque des revendications 1 à 4, **caractérisé en ce que**, durant la recharge (35), le régime du moteur thermique (10) est piloté par la pédale d'accélération.

6. Procédé de contrôle selon l'une quelconque des revendications 1 à 5, **caractérisé en ce que** la recharge (35) est désactivée si l'une quelconque des conditions suivantes est respectée:
- si le levier de commande d'une boite de vitesses (13) du véhicule est positionné dans une position d'une marche arrière, dans une position d'un fonctionnement automatique de la boite de vitesses ou dans une position d'un fonctionnement manuel de la boite de vitesses,
- si un mode de roulage à propulsion uniquement électrique est sélectionné,
- si la vitesse du véhicule est supérieure à un seuil prédéterminé.

## Patentansprüche

1. Verfahren zum Steuern des Aufladens (35) einer Traktionsbatterie (14) für ein Hybridkraftfahrzeug mit einer Wärmekraftmaschine (10) und einer elektrischen Traktionsmaschine (12), bei dem das Aufladen (35) der Traktionsbatterie gesteuert wird durch a Nachlademomentsollwert, der sich entsprechend der Drehzahl des Verbrennungsmotors (10) ändert und ausgeführt wird, wenn das Fahrzeug steht, wobei das Verfahren **dadurch gekennzeichnet ist, dass** die Aktivierung (34) der Nachladung (35) ausgelöst wird: - bei Detektion (33 ) des Erreichens einer vorbestimmten Position zum Auslösen des Nachladens (Prec) durch das Fahrpedal des Fahrzeugs, und
- Nur bei Erfassung (32) der Positionierung des Steuerhebels eines Schaltgetriebes (13) des Fahrzeugs in einer Neutralstellung oder in einer Parkstellung des Fahrzeugs.

2. Steuerverfahren nach Anspruch 1, **dadurch gekennzeichnet, dass** die Aktivierung (34) des Nachladens (35) unmittelbar nach dem Erfassen (33) des Erreichens der vorbestimmten Position zum Auslösen des Nachladens (Prec) ausgelöst wird.

3. Steuerverfahren nach Anspruch 1 oder 2, **dadurch gekennzeichnet, dass** die vorgegebene Position zum Auslösen des Nachladens (Prec) in einem Niederdrückbereich liegt, der durch die Positionen begrenzt ist, die jeweils einem 80 % und 100 % Niederdrücken des Gaspedals entsprechen.

4. Steuerverfahren nach einem der Ansprüche 1 bis 3, **dadurch gekennzeichnet, daß** während des Nachladens (35) die Leistung des Nachladens durch Niederdrücken des Gaspedals steuerbar ist.

5. Steuerverfahren nach einem der Ansprüche 1 bis 4, **dadurch gekennzeichnet, daß** während des Nachladens (35) die Drehzahl des Verbrennungsmotors (10) durch das Fahrpedal gesteuert wird.

6. Steuerverfahren nach einem der Ansprüche 1 bis 5, **dadurch gekennzeichnet, dass** die Nachfüllung (35) deaktiviert wird, wenn eine der folgenden Bedingungen eingehalten wird:
- wenn der Steuerhebel eines Getriebes (13) des Fahrzeugs in einer Position für den Rückwärtsgang, in einer Position für den automatischen Betrieb des Getriebes oder in einer Position für den manuellen Betrieb des Getriebes positioniert ist,
- wenn ein rein elektrischer Fahrmodus ausgewählt ist,
- wenn die Geschwindigkeit des Fahrzeugs größer als ein vorbestimmter Schwellenwert ist.

## Claims

1. Method for controlling recharging (35) of a traction battery (14) for a hybrid motor vehicle comprising a heat engine (10) and an electric traction machine (12), in which the recharging (35) of the traction battery is controlled by a recharging torque setpoint which varies according to the speed of the combustion engine (10) and is executed when the vehicle is stationary, the method being **characterized in that** the activation (34) of the recharging (35) is triggered: - upon detection (33) of the reaching of a predetermined position for triggering the recharging (Prec) by the accelerator pedal of the vehicle, and
- Only in the event of detection (32) of the positioning of the control lever of a gearbox (13) of the vehicle in a neutral position or in a parking position of the vehicle.

2. Control method according to Claim 1, **characterized in that** the activation (34) of the recharge (35) is triggered immediately after the detection (33) of the reaching of the predetermined position for triggering the recharge (Prec).

3. Control method according to Claim 1 or 2, **characterized in that** the predetermined position for triggering the recharging (Prec) is situated in a depression range delimited by the positions corresponding respectively to 80% and 100% depression of the accelerator pedal.

4. Control method according to any one of Claims 1 to 3, **characterized in that**, during recharging (35), the power of the recharging can be controlled by depressing the accelerator pedal.

5. Control method according to any one of Claims 1 to 4, **characterized in that**, during recharging (35), the speed of the combustion engine (10) is controlled by the accelerator pedal.

6. Control method according to any one of Claims 1 to 5, **characterized in that** the refill (35) is deactivated if any one of the following conditions is respected:
- if the control lever of a gearbox (13) of the vehicle is positioned in a position for reverse gear, in a position for automatic operation of the gearbox or in a position for manual operation of the gearbox,
- if a purely electric drive mode is selected,
- if the speed of the vehicle is greater than a predetermined threshold.
